# EUROPEAN PATENT APPLICATION

(11) **EP 2 639 521 A1**
(43) Date of publication of application: **18.09.2013**
(21) Application number: 11840404.5
(22) Date of filing: 10.06.2011
(51) Int. Cl.: F24H 1/18, F24H 1/00, H01M 8/00, H01M 8/04, H04Q 9/00

(54) **FUEL CELL SYSTEM AND METHOD FOR CONTROLLING FUEL CELL SYSTEM**

(30) Priority: 10.11.2010 JP 2010251458
(71) Applicant: Panasonic Corporation, Osaka 571-8501 (JP)
(72) Inventor: OISHI, Hitoshi, Osaka 540-6207 (JP); KATOU, Motomichi, Osaka 540-6207 (JP); NASU, Ichiro, Osaka 540-6207 (JP)
(74) Representative: Grünecker, Kinkeldey, Stockmair & Schwanhäusser
(86) International application number: PCT/JP2011/003311
(87) International publication number: WO 2012/063380

(57) **Abstract**

A fuel cell system according to the present invention includes: a power generation unit (100); a hot water storage unit (102); a display (101), and a controller (105). A control device (201) of the display (101) is configured such that when an alarm signal is inputted from the controller (105), the control device (201) causes a display device (202) to display both thermal information and alarm information, the thermal information containing at least one of a set temperature of hot water supply from the hot water storage unit (102), a remaining hot water amount in the hot water storage unit (102), and an operation state of a heating device configured to heat hot water in the hot water storage unit (102), the alarm information indicating a content associated with the alarm signal. Thereafter, when an operating device (203) is operated, the control device (201) causes the display device (202) to display both the alarm information and detailed alarm information which indicates a more detailed content than the alarm information.

## Description

### Technical Field

The present invention relates to a fuel cell system and a method of controlling the fuel cell system, the fuel cell system being configured to perform power generation by using an oxidizing gas and a fuel gas supplied thereto and display alarm information on a display of the fuel cell system when an abnormality has occurred in the system.

### Background Art

Conventionally, a remote controller of a fuel cell system of the above-described kind is configured such that, in a case where a timing of periodic maintenance to be performed on the fuel cell has arrived or a case where an error has occurred in the fuel cell system, the remote controller displays an icon corresponding to the case, and causes an LED display to indicate a portion at which the error has occurred (see Patent Literature 1, for example).

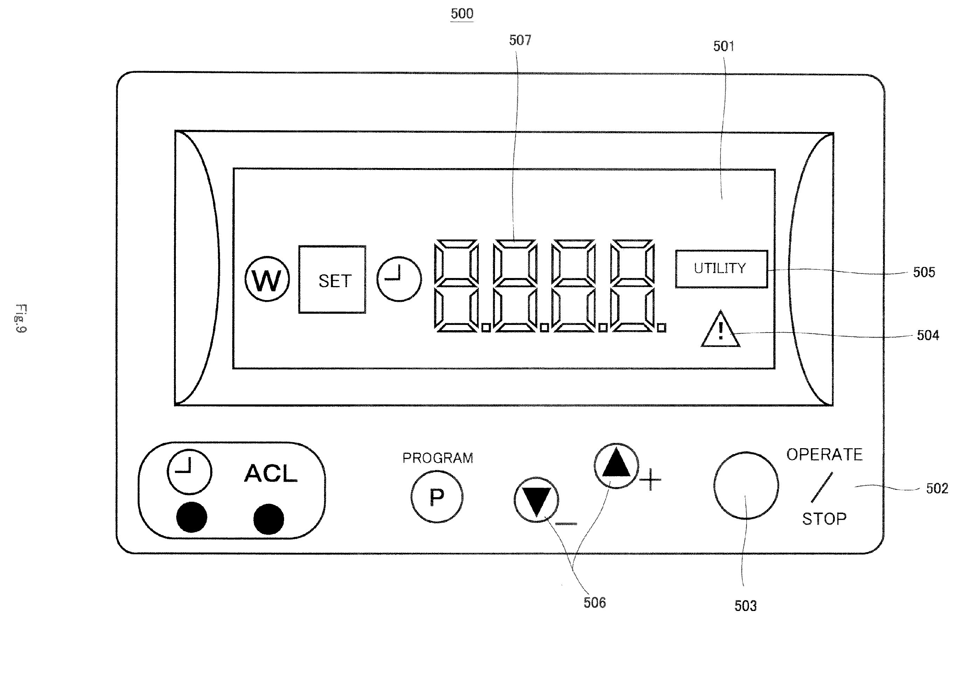

Fig. 9 shows the configuration of a remote controller of a conventional fuel cell system disclosed in Patent Literature 1. As shown in Fig. 9, a remote controller 500 of the fuel cell system includes: an LED display 507; a display 501 including an error display 504 and a utility display 505 which indicate, with fixed icons, the occurrence of an error and the arrival of a periodic maintenance timing; and an operating portion 502 including an operation switch 503 with which to operate/stop the fuel cell and an up-down switch 506 with which to set the time and make power generation output settings. The remote controller 500 is configured such that when it becomes necessary for maintenance to be performed on the fuel cell, the utility display 505 is lit up and the LED display 507 indicates (with numbers, alphabets, or the like set in advance) a portion that requires the maintenance. If an error has occurred in the fuel cell system, the error display 504 is lit up and the LED display 507 indicates (with numbers, alphabets, or the like set in advance) a portion where the error has occurred.

There is also a known fuel cell power generator system including a display device. The display device displays an error code on a part of a screen when an abnormality has occurred in the fuel cell power generator system (see Patent Literature 2, for example). The fuel cell power generator system disclosed in Patent Literature 2 displays an error code on the display device as mentioned above, thereby notifying a user that an abnormality has occurred in the system.

### Citation List

### Patent Literature

PTL 1: Japanese Laid-Open Patent Application Publication No. 2002-175827
PTL 2: Japanese Laid-Open Patent Application Publication No. 2010-14373

### Summary of Invention

### Technical Problem

However, the remote controller 500 of the fuel cell system disclosed in Patent Literature 1 is configured to cause the LED display 507 to indicate a portion that requires maintenance and a portion where an error has occurred while deleting the display of, for example, thermal information. As a result, for example, in a case where a hot water supply temperature is set to a high temperature, there is a problem in that the user uses hot water without being aware of the set temperature and touches the high-temperature hot water. In addition, since the error display indicates only a portion where an error has occurred, there is a problem in that the user cannot know the details of the error.

Similarly, in the fuel cell power generator system disclosed in Patent Literature 2, the display device displays only an error code as an error display, and thus there is a problem in that the user cannot know the details of the error.

The present invention solves the above conventional problems. An object of the present invention is to provide a fuel cell system and a method of controlling the fuel cell system, the fuel cell system being configured such that when giving a notification of alarm information about the fuel cell system such as information indicating that an abnormality has occurred in the fuel cell system, the fuel cell system causes a display to display the alarm information without deleting a display of thermal information, thereby allowing the user to use hot water at ease, and to display the alarm information in such a manner as to allow the user to know the details of the alarm information.

### Solution to Problem

In order to solve the above-described conventional problems, the present invention is directed to a fuel cell system including: a power generation unit configured to generate electric power and heat by usuig a fuel gas and an oxidizing gas; and a hot water storage unit configured to store the heat that is supplied from the power generation unit. The fuel cell system according to the present invention includes: a display including a control device, an operating device, and a display device; and a controller configured to output an alarm signal to the display. The display device of the display is configured to switch a screen to display between at least a first display screen and a second display screen. The first display screen displays both thermal information and alarm information, the thermal information containing at least one of a set temperature of hot water supply from the hot water storage unit, a remaining hot water amount in the hot water storage unit, and an operation state of a heating device configure to heat hot water in the hot water storage mit, the alarm information indicating a content associated with the alarm signal. The second display screen displays both the alarm information and detailed alarm information which indicates a more detailed content than the alarm information. The control device of the display is configured such that when the alarm signal is inputted from the controller, the control device causes the display device to display the first display screen, and when the operating device is operated while the first display screen is displayed, the control device causes the display device to display the second display screen.

Accordingly, when giving a notification of alarm information about the fuel cell system such as information indicating that an abnormality has occurred in the fuel cell system, the fuel cell system displays the alarm information without deleting the display of thermal information. This allows the user to confirm thermal information setting or make temperature setting, and then use hot water in a bathtub or kitchen. Thus, the user can use hot water at ease.

Through detailed alarm information display, a maintenance service person can be informed of detailed alarm information, such as information as to what kind of abnormality has occurred. This makes it possible to reduce the maintenance time.

A fuel cell system control method according to the present invention is a method of controlling a fuel cell system including: a power generation unit configured to generate electric power and heat by using a fuel gas and an oxidizing gas; and a hot water storage unit configured to store the heat that is supplied from the power generation unit. The method includes the steps of: (A) causing, when an alarm signal is inputted into a control device of a display, a display device of the display to display both thermal information and alarm information, the thermal information containing at least one of a set temperature of hot water supply from the hot water storage unit, a remaining hot water amount in the hot water storage unit, and an operation state of a heating device configured to heat hot water in the hot water storage unit, the alarm information indicating that an abnormality has occurred in the fuel cell system; and (B) causing, when an operating device of the display is operated after the step (A), the display device of the display to display both the alarm information and detailed alarm information which indicates a more detailed content than the alarm information.

Accordingly, when giving a notification of alarm information about the fuel cell system such as information indicating that an abnormality has occurred in the fuel cell system, the fuel cell system displays the alarm information without deleting the display of thermal information. This allows the user to confirm thermal information setting or make temperature setting, and then use hot water in a bathtub or kitchen. Thus, the user can use hot water at ease.

Through detailed alarm information display, a maintenance service person can be informed of detailed alarm information, such as information as to what kind of abnormality has occurred. This makes it possible to reduce the maintenance time.

The above object, other objects, features, and advantages of the present invention will be made clear by the following detailed description of preferred embodiments with reference to the accompanying drawings.

### Advantageous Effects of Invention

According to the fuel cell system and the method of controlling the fuel cell system of the present invention, when giving a notification of alarm information about the fuel cell system such as information indicating that an abnormality has occurred in the fuel cell system, the fuel cell system displays the alarm information without deleting the display of thermal information. This allows the user to use hot water at ease. Moreover, through detailed alarm information display, a maintenance service person can be informed of detailed information, such as information as to what kind of abnormality has occurred. This makes it possible to efficiently perform maintenance.

### Brief Description of Drawings

[Fig. 1] Fig. 1 shows the configuration of a fuel cell system according to Embodiment 1 of the present invention.
[Fig. 2] Fig. 2 is a block diagram showing a schematic configuration of a display of the fuel cell system shown in Fig. 1.
[Fig. 3] Fig. 3 shows an example of a table indicating a correspondence relationship among alarm signals, alarm information, and detailed alarm information.
[Fig. 4] Fig. 4 is a schematic diagram showing an external view of the display of the fuel cell system shown in Fig. 1.
[Fig. 5] Fig. 5 is a schematic diagram showing an external view of the display of the fuel cell system shown in Fig. 1.
[Fig. 6] Fig. 6 is a schematic diagram showing an external view of the display of the fuel cell system shown in Fig. 1.
[Fig. 7] Fig. 7 is a schematic diagram showing an external view of the display of the fuel cell system shown in Fig. 1.
[Fig. 8] Fig. 8 is a flowchart illustrating operations of the fuel cell system according to Embodiment 1.
[Fig. 9] Fig. 9 shows the configuration of a remote controller of a conventional fuel cell system disclosed in Patent Literature 1.

### Description of Embodiments

A first aspect of the present invention is a fuel cell system including: a power generation unit configured to generate electric power and heat by using a fuel gas and an oxidizing gas; a hot water storage unit configured to store the heat that is supplied from the power generation unit; a display including a control device, an operating device, and a display device; and a controller configured to output an alarm signal to the display. The display device of the display is configured to switch a screen to display between at least a first display screen and a second display screen. The first display screen displays both thermal information and alarm information, the thermal information containing at least one of a set temperature of hot water supply from the hot water storage unit, a remaining hot water amount in the hot water storage unit, and an operation state of a heating device configured to heat hot water in the hot water storage unit, the alarm information indicating a content associated with the alarm signal. The second display screen displays both the alarm information and detailed alarm information which indicates a more detailed content than the alarm information. The control device of the display is configured such that when the alarm signal is inputted from the controller, the control device causes the display device to display the first display screen, and when the operating device is operated while the first display screen is displayed, the control device causes the display device to display the second display screen.

The set temperature of hot water supply herein refers to a temperature set for any hot water supplied in a household, for example, hot water supplied into a bathtub or hot water supplied in a kitchen.

A second aspect of the present invention is such that, in the fuel cell system according to the first aspect, the display includes a storage device storing a table or a map, the table or the map indicating a correspondence relationship between the alarm signal, the alarm information, and the detailed alarm information.

A third aspect of the present invention is such that, in the fuel cell system according to the second aspect, the control device of the display specifies the alarm information and the detailed alarm information based on the alarm signal inputted from the controller and the table or the map stored in the storage device.

A fourth aspect of the present invention is such that, in the fuel cell system according to the first or second aspect, while the display device displays the second display screen, when a first time set in advance has elapsed and/or the operating device is operated, the control device of the display causes the display device to display the first display screen or a third display screen, the third display screen not displaying the alarm information.

The first time herein may be set to any period of time. The first time may be one minute or thirty seconds, for example.

A fifth aspect of the present invention is such that, in the fuel cell system according to any one of the first to fourth aspects, the detailed alarm information contains at least one of: information indicating whether an abnormality that has occurred is handleable by a user; and information indicating that the abnormality that has occurred is handleable by the user and indicating how to handle the abnormality.

A sixth aspect of the present invention is such that, in the fuel cell system according to any one of the first to fourth aspects, the detailed alarm information contains at least one of information about a name of the alarm signal; and information about a probable cause of an abnormality that has occurred in the fuel cell system.

The information about the name of the alarm signal herein is, for example, information such as "power generation unit abnormality" which briefly (simply) indicates what the abnormality is, or "periodic maintenance information" which briefly (simply) indicates what the alarm is about.

A seventh aspect of the present invention is such that, in the fuel cell system according to any one of the first to fourth aspects, the detailed alarm information contains at least one of: information about a period remaining until periodic maintenance on the fuel cell system is performed; and information about a period remaining until an end of a life of the fuel cell system is reached.

An eighth aspect of the present invention is such that, in the fuel cell system according to the seventh aspect, the control device of the display changes a manner of displaying the detailed alarm information when at least one of the period remaining until the maintenance on the fuel cell system is performed and the period remaining until the end of the life of the fuel cell system is reached has become a first period or shorter.

The first period herein may be set to any period. The first period may be, for example, six months, one month, or two weeks.

A ninth aspect of the present invention is such that, in the fuel cell system according to the eighth aspect, the control device of the display causes the display device to display the detailed alarm information in such a manner as to blink at a first cycle.

The first cycle herein may also be set to any cycle. The first cycle may be one second or two seconds.

A tenth aspect of the present invention is such that, in the fuel cell system according to the ninth aspect, the control device of the display causes the display device to display the detailed alarm information in such a manner as to blink at a second cycle when at least one of the period remaining until the maintenance on the fuel cell system is performed and the period remaining until the end of the life of the fuel cell system is reached has become a second period or shorter, the second period being shorter than the first period.

The second period herein may be set to any period. The second period may be, for example, five months, one month, or one week. The second cycle may be set to any cycle. The second cycle may be, for example, 0.5 second or one second.

An eleventh aspect of the present invention is such that, in the fuel cell system according to the tenth aspect, the second cycle is shorter than the first cycle.

A twelfth aspect of the present invention is such that, in the fuel cell system according to any of the first to eleventh aspects, the thermal information further contains a hot water temperature in a bathtub.

Hereinafter, embodiments of the present invention are described with reference to the drawings. It should be noted that the present invention is not united by the embodiments.

### (Embodiment 1)

### [Configuration of Fuel Cell System]

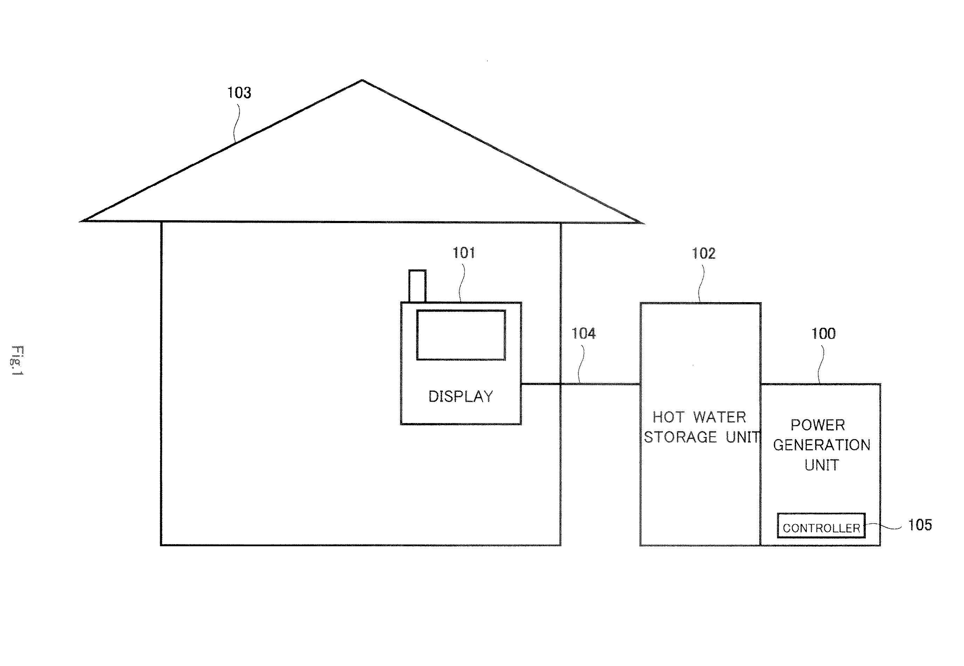

Fig. 1 shows the configuration of a fuel cell system according to Embodiment 1 of the present invention.

As shown in Fig. 1, the fuel cell system according to Embodiment 1 includes a power generation unit 100, a hot water storage unit 102, a controller 105, and a display 101. The hot water storage unit 102 is configured to recover exhaust heat that is generated when the power generation unit 100 performs power generation, store the recovered heat in the form of hot water, and supply the hot water to a household 103. The hot water storage unit 102 includes a tank serving to store hot water and a heating device configured to heat the hot water in the hot water storage unit 102 (the tank and the heating device are not shown). An electric heater can be used as the heating device. It should be noted that the power generation unit 100 and the hot water storage unit 102 are connected by, for example, heating medium piping through which heat is exchanged.

the power generation unit 100 is configured to perform power generation and supply the hot water storage unit 102 with exhaust heat that is generated when the power generation unit 100 performs the power generation. The power generation unit 100 may be, for example, a gas-fired power generator configured to perform gas combustion, thereby performing joint supplying of electric power and heat, or a fuel cell unit including a fuel cell stack configured to generate electric power and heat by causing an electrochemical reaction between a fuel gas and an oxidizing gas. In a case where the power generation unit 100 is a fuel cell system, the power generation unit 100 may include: a reformer configured to cause a reaction between a raw material gas and steam, thereby reforming the raw material gas to generate a fuel gas, and supply the fuel gas to a stack (fuel cell stack); and an inverter configured to convert DC power generated by the stack into AC power.

The controller 105 may be configured as any device, so long as the device is configured to control component devices of the fuel cell system. For example, the controller 105 includes: an arithmetic processor exemplified by a microprocessor, CPU, or the like; and a storage device configured as a memory or the like storing programs for performing control operations. Through the loading and execution, by the arithmetic processor, of a predetermined control program stored in the storage device, the controller 105 performs various controls of the fuel cell system.

The controller 105 is configured to output an alarm signal to the display 101. The alarm signal herein refers to a signal for causing the display 101 to display an alarm regarding the fuel cell system. Examples of the alarm regarding the fuel cell system include: abnormality information about an abnormality in the fuel cell system (specifically, in the power generation unit 100 and the hot water storage unit 102); cause information about a probable cause of an abnormality in the fuel cell system; period information about a period remaining until periodic maintenance on the fuel cell system is performed; and period information about a period remaining until the end of the life of the fuel cell system is reached.

Examples of an abnormality in the fuel cell system include: an abnormality handleable by the controller 105 (an abnormality that can be normalized by the controller 105); an abnormality handleable by a user; and an abnormality to be handled by a service person.

It should be noted that the controller 105 may be configured not only as a single controller, but as a group of multiple controllers which operate in cooperation with each other to control the fuel cell system. The controller 105 may be configured as a microcontroller. Furthermore, the controller 105 may be configured as an MPU, PLC (Programmable Logic Controller), logic circuit, or the like.

The fuel cell system and the display 101 are connected via an in-home communication line 104. The in-home communication line 104 can be realized as a wireless communication line implementing, for example, short-distance wireless communication such as a wireless LAN or Bluetooth (Japanese Trademark Registration No. 477936), or specified low power radio. In such a case, each of the display 101, the power generation unit 100, and the hot water storage unit 102 is required to include a wireless communication device.

### [Configuration of Display]

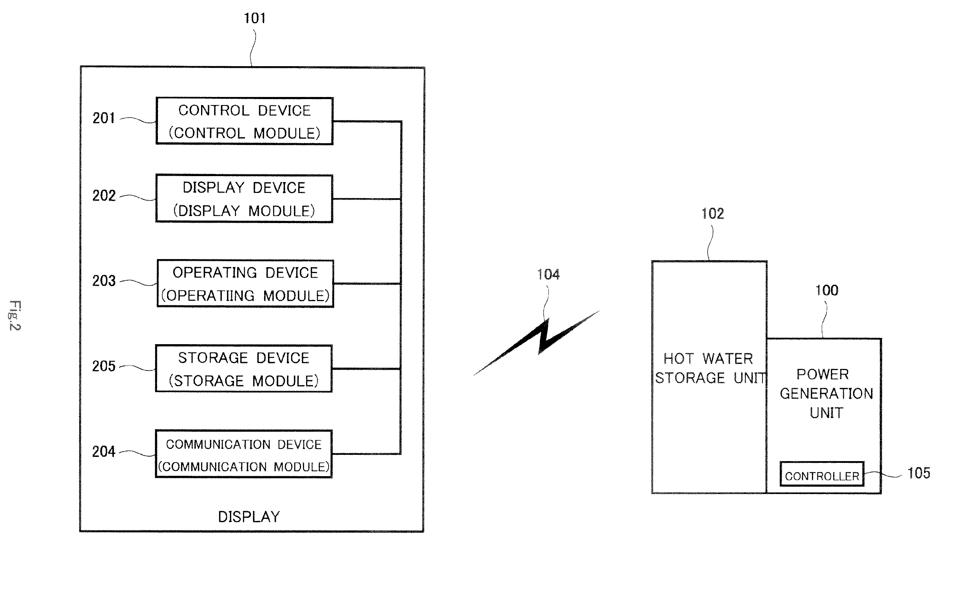

Fig. 2 is a block diagram showing a schematic configuration of the display of the fuel cell system shown in Fig. 1.

As shown in Fig. 2, the display 101 includes: a communication device (communication module) 204 configured to communicate with the power generation unit 100 or the hot water storage unit 102; an operating device (operating module) 203 through which to specify control items of the power generation unit 100 or thermal settings of the hot water storage unit; a display device (display module) 202 configured to display control items of the power generation unit 100, an operating state of the fuel cell, and thermal settings and thermal information regarding the hot water storage unit 102; and a control device (control module) 201 configured to control the communication device 204, the operating device 203, and the display device 202. The display 101 further includes a storage device (storage module) 205. It should be noted that the display 101 may be a touch panel display, in which the operating device 203 and the display device 202 are integrated.

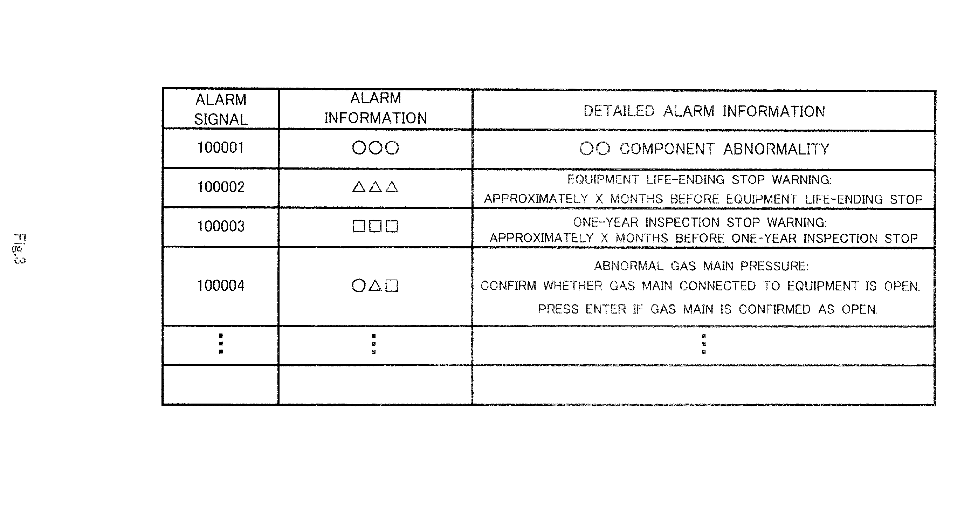

The storage device 205 stores a table or a map indicating a correspondence relationship among alarm signals, alarm information, and detailed alarm information (see Fig.3). The control device 201 specifies alarm information and detailed alarm information based on an alarm signal inputted from the controller 105 and the table or map stored in the storage device. Fig. 3 shows an example of a table indicating a correspondence relationship among alarm signals, alarm information, and detailed alarm information.

### [Operations and Functions of Fuel Cell System]

Next, operations (control method) and functions of the fuel cell system according to Embodiment 1 are described with reference to Fig. 1 to Fig. 6. It should be noted that the present embodiment is described below by taking, as an example, a case where the power generation unit 100 is a fuel cell unit.

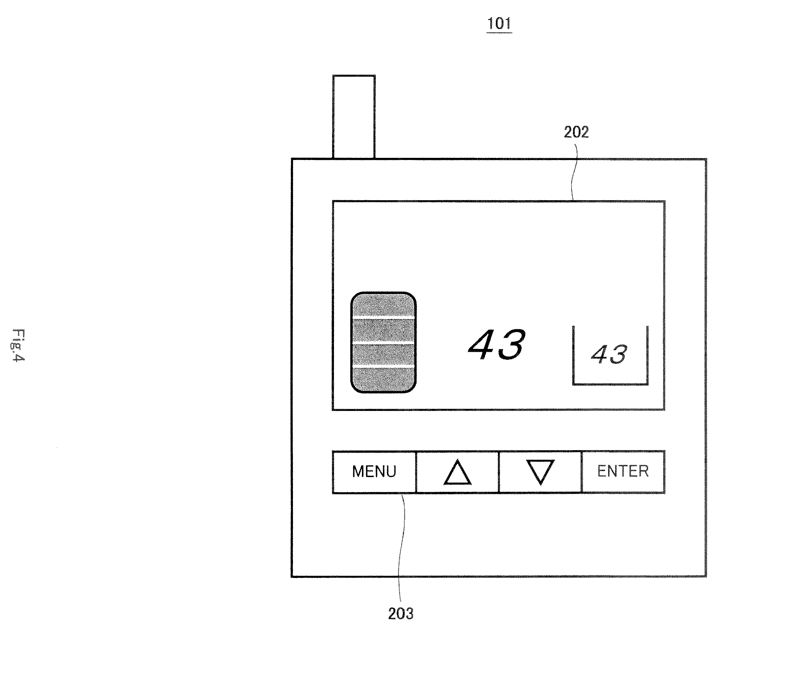

Fig. 4 is a schematic diagram showing an external view of the display of the fuel cell system shown in Fig. 1. It should be noted that Fig. 4 shows an example of a normal state (a state where a third display screen is displayed; third display state).

As shown in Fig. 4, the display 101 is provided with the display device 202 and the operating device 203. The display device 202 displays a remaining hot water amount in the hot water storage unit 102, a hot water supply temperature, and a hot water temperature in a bathtub. The operating device 203 includes a menu key, a down key, an up key, and an enter key. Various settings of the fuel cell system are made through operations of these keys.

Specifically, for example, when a user takes a shower, the user confirms a set value of the hot water supply temperature displayed by the display device 202 of the display 101. When the user wishes to change the set temperature, the user operates the operating device 203 to set the hot water supply temperature to a desired value. Upon detecting that the operating device 203 has been operated, the control device 201 calculates the temperature set by the user, and transmits data of the set temperature to the display device 202. At the same time as transmitting the set temperature data to the display device 202, the control device 201 transmits the set temperature data to the hot water storage unit 102 via the in-home communication line 104 (see Fig. 2). As a result, the hot water storage unit 102 supplies hot water based on the received set temperature data.

Since the fuel cell system includes two units that are the hot water storage unit 102 and the fuel cell unit, there is a case where failures occur in the two units at the same time. Also, since the components and control of the fuel cell unit are complex, there is a case where multiple failures occur in the fuel cell unit at the same time. The controller 105 transmits an alarm signal when a failure has occurred in the fuel cell unit or the hot water storage unit 102, and the display 10 receives the alarm signal via the in-home communication line 104. Based on the received alarm signal and the table or map shown in Fig. 3, the control device 201 of the display 101 specifies alarm information and then transmits the specified alarm information to the display device 202. The display device 202 displays the received alarm information. At the time, the alarm information is displayed in such a manner that thermal information containing at least the set hot water supply temperature is not deleted from the display.

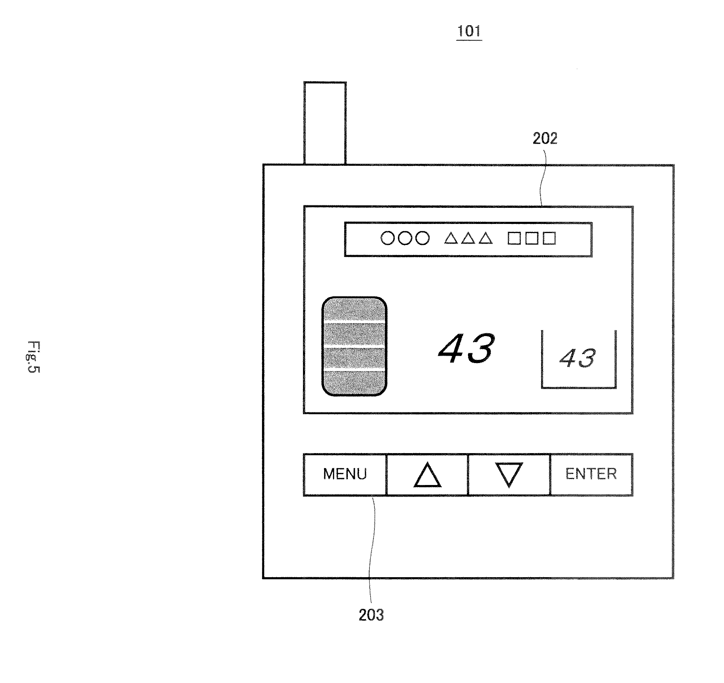

Hereinafter, with reference to Fig. 5 to Fig. 7, a description is given of states where alarm information is displayed by the display device 202 of the display 101 (a first display state (first display screen) and a second display state (second display screen)).

Fig. 5 is a schematic diagram showing an external view of the display of the fuel cell system shown in Fig. 1. It should be noted that Fig. 5 shows an example, of the first display state (first display screen).

As shown in Fig. 5, in addition to a remaining hot water amount in the hot water storage unit 102, a hot water supply temperature, and a hot water temperature in a bathtub, the display device 202 of the display 101 displays characters such as ○○○, ΔΔΔ, and □□□, which are alarm information. The display 101 is configured to display received alarm information in a dialogue manner, and cause the alarm information, which is displayed in a dialogue manner, to blink at a predetermined cycle. Thus, when a notification of alarm information about the fuel cell system such as information indicating that an abnormality has occurred in the fuel cell system is given, an alarm display is presented without deleting the display of thermal information. This allows the user to confirm thermal information setting or make temperature setting, and then use hot water, such as taking a shower. Thus, the user can use hot water at ease.

It should be noted that the thermal information contains at least one of: a remaining hot water amount in the hot water storage unit 102; a hot water temperature in a bathtub; and an operation state of a combustor configured to heat the hot water in the hot water storage unit 102. Moreover, information other than that shown in Fig. 5 may be additionally displayed.

The thermal information is displayed together with the alarm information for a reason described below. In a case where water or hot water is drained from the hot water storage unit 102 due to an occurrence of a failure or absence of the user from the installation location for a long time, or in a case where a stopper for the hot water storage unit 102 has been pulled out for letting remaining high-temperature water out of the hot water storage unit 102, there is a risk that the user or a service person performing maintenance (hereinafter, referred to as a "maintenance service person") touches high-temperature water. In addition, starting maintenance work when the combustor is in operation involves risks. Therefore, the thermal information is necessary during normal use as well as at the time of performing maintenance, and thus it is necessary to keep the thermal information displayed while the alarm information is displayed.

Referring to Fig. 5, displayed are: a hot water supply temperature, which is a set temperature of hot water supply from the hot water storage unit 102; a remaining hot water amount in the hot water storage unit 102; and a hot water temperature in a bathtub. Such a display allows the user to confirm thermal information setting or the operation state of the hot water storage unit, and then use the system equipment or perform maintenance. Thus, the equipment can be used more safely and the maintenance can be performed more safely.

While in the first display state of displaying the alarm information, when the user operates the operating device 203, the display 101 deletes the display of thermal information and gives a display in the second display state where the details of the alarm information are displayed.

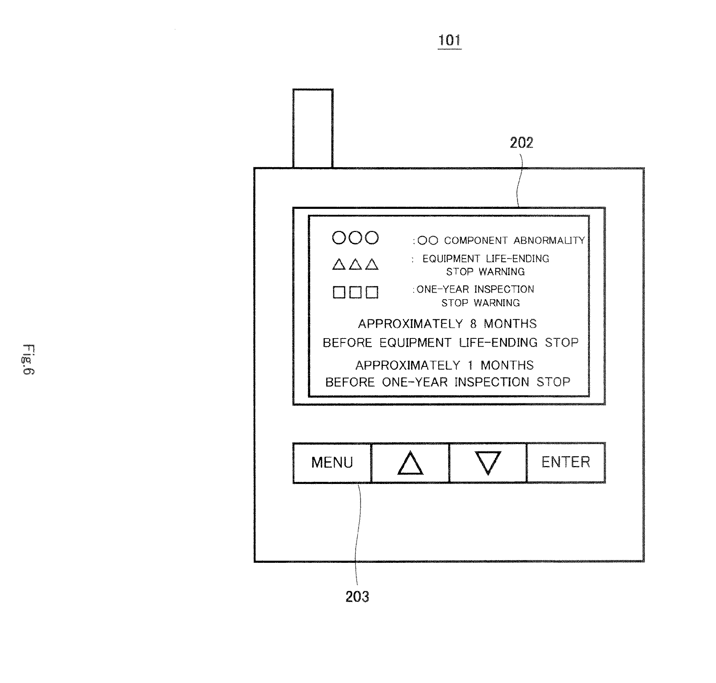

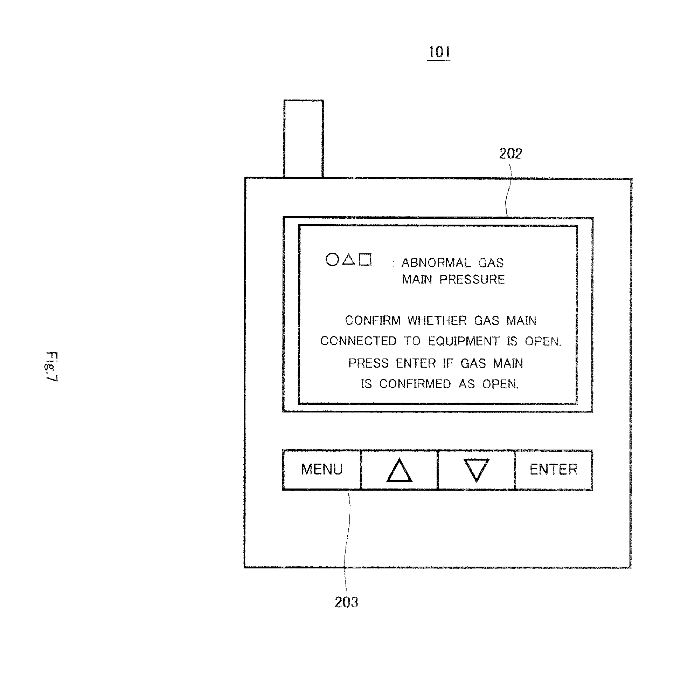

Fig. 6 and Fig. 7 are schematic diagrams showing external views of the display of the fuel cell system shown in Fig. 1. It should be noted that Fig. 6 shows one example, of the second display state (second display screen), and Fig. 7 shows another example of the second display state (second display screen).

As described above, in the first display state shown in Fig. 5, the control device 201 of the display 101 determines whether the operating device 203 has been operated. If the operating device 203 has been operated, then as shown in Fig. 6 or Fig. 7, the control device 201 causes the display device 202 to display the specified alarm information and corresponding detailed alarm information (second display state).

Such a display allows the user to confirm the information shown in the second display state (i.e., information displayed in the second display screen), and the user can inform a maintenance service person of the detailed alarm information. As a result, the maintenance service person can accurately specify a failed component in a short time. This makes it possible to eliminate such work as bringing unnecessary components from a repairing center, and thus such a waste of man hours can be eliminated. In this manner, maintenance can be performed efficiently and the maintenance time can be reduced.

The detailed alarm information contains at least one of: the name of the alarm information; a probable cause of the abnormality that has occurred; information as to whether the abnormality is a failure handleable by the user; in a case where the abnormality is a failure handleable by the user, information indicating that the abnormality is a failure handleable by the user and indicating how to handle the failure; a timing of periodic maintenance to be performed on the fuel cell system; and a period remaining until the end of the life of the fuel cell system.

Accordingly, for example, if the detailed alarm information contains the name of the alarm information or a probable cause of the abnormality that has occurred, then the cause of the abnormality can be determined at the repairing center and thereby a component to be repaired can be specified. If the cause can be determined, then advice can be provided to the user about the usage of the equipment, and thus failures to occur in the future can be reduced.

If the alarm information is information as to whether the abnormality is a failure handleable by the user, or if, in a case where the abnormality is a failure handleable by the user, the alarm information indicates that the abnormality is a failure handleable by the user and indicates how to handle the failure, then some failures can be handled by the user. As a result, the necessity for the repairing center to send a maintenance service person to the user is reduced. This makes it possible to reduce, for the user, the cost of maintenance for repairing and the cost of periodic maintenance.

Generally speaking, a fuel cell unit requires periodic maintenance in order to maintain its performance, and has a function of stopping its operation if predetermined maintenance is not performed. For this reason, a predetermined period before such an operation stop for inspection, a warning alarm starts to be displayed by the display 101 to actively notify the user of the timing of the operation stop. This improves convenience for the user.

Fuel cell units are greatly expected to contribute to CO₂ emission reduction. However, compared to other general appliances, available behavioral information about fuel cell units when they reach the end of their designed service life is insufficient. Therefore, fuel cell units need to be designed such that unexpected problems are prevented from occurring when the fuel cell units reach the end of their designed service life. Accordingly, the fuel cell system has a function of stopping operating and ending its life when reaching the end of its designed service life. Therefore, similar to the warning alarm for periodic maintenance, a warning alarm starts to be displayed by the display 101 a predetermined period before such a life-ending operation stop to actively notify the user of the timing of the life-ending operation stop. This improves convenience for the user.

It should be noted that the life-ending operation stop of the fuel cell system according to the present embodiment when the fuel cell system has reached the end of its designed service lile is the same as that of a conventional fuel cell system. Therefore, in the present embodiment, a description of the life-ending operation stop is omitted. In view of the above-described requirements for the operation stops, Fig. 6 shows an example of displaying the name of alarm information, an alarm for equipment life-ending operation stop, and an alarm for one-year inspection stop.

Meanwhile, Fig. 7 shows an example of displaying instructions to the user about how to handle alarm information. Such a display allows the user to handle some failures by themselves. As a result, the necessity for the repairing center to send a maintenance service person to the user is reduced. This makes it possible to reduce, for the user, the cost of maintenance for repairing and the cost of periodic maintenance.

It should be noted that at the time of displaying information in the second display state, it is not necessary to switch the entire front display (i.e., the entire first display screen) of the display device 202. For example, part of the information displayed in the first display state may be left, and information for display in the second display state may be additionally displayed.

Further, the second display state may be such that the display blinks in such a manner as to allow the user to recognize the blinking. In this case, for example, when at least one of a period remaining until maintenance on the fuel cell system is performed and a period remaining until the end of the life of the fuel cell system is reached has become a first period or shorter, the control device 201 of the display 101 may cause at least one of the alarm information and the detailed alarm information to blink at a first cycle.

The first period herein may be set to any period. The first period may be, for example, six months, one month, or two weeks. The first cycle may also be set to any cycle. The first cycle may be one second or two seconds.

Further, when at least one of the period remaining until maintenance on the fuel cell system is performed and the period remaining until the end of the life of the fuel cell system is reached has become a second period or shorter, the second period being shorter than the first period, the control device 201 of the display 101 may cause the display device 202 to display at least one of the alarm information and the detailed alarm information in such a manner as to blink at a second cycle. The second period herein may be set to any period, so long as the second period is shorter than the first period. The second period may be, for example, five months, one month, or one week. The second cycle may be set to any cycle, so long as the second cycle is shorter than the first cycle. The second cycle may be, for example, 0.5 second or one second.

In this manner, at least one of the alarm information and the detailed alarm information can be made more recognizable for the user, and thereby the convenience of the fuel cell system for the user is further improved.

Next, a manner of displaying information on the display of the fuel cell system according to Embodiment 1 is described.

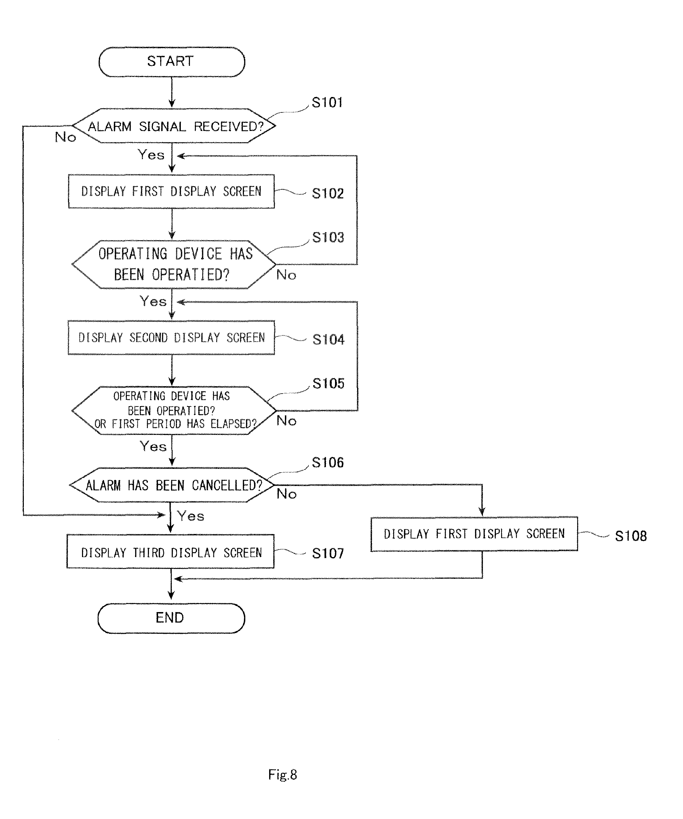

Fig. 8 is a flowchart illustrating the operations of the fuel cell system according to Embodiment 1.

As shown in Fig. 8, the control device 201 of the display 101 confirms whether an alarm signal has been received from the fuel cell unit or the hot water storage unit 102 (step S101). If no alarm information has been received (No in step S101), the control device 201 causes the display device 202 to display the third display screen (see Fig. 4) (step S107).

On the other hand, if alarm information has been received (Yes in step S101), the control device 201 causes the display device 202 to display the first display screen (see Fig. 5). Next, the control device 201 confirms whether the operating device 203 has been operated by the user (step S103).

If the operating device 203 has not been operated (No in step S103), the control device 201 returns to step S102 (i.e., maintains a state where the first display screen is displayed), and repeats steps S102 and S103 until the operating device 203 is operated. On the other hand, if the operating device 203 has been operated by the user (Yes in step S 103), the control device 201 proceeds to step S 104.

In step S104, the control device 201 causes the display device 202 to display the second display screen (see Fig. 6 and Fig. 7). Next, the control device 201 determines whether the operating device 203 has been operated by the user, or determines whether a time elapsed after the display device 202 is caused to display the second display screen in step S104 has become a first time set in advance or longer (step S105). The first time herein may be set to any period of time. The first time may be one minute or thirty seconds, for example.

If the operating device 203 has not been operated, or if the first time has not yet elapsed (No in step S105), the control device 201 returns to step S104 (i.e., maintains a state where the second display screen is displayed), and repeats steps S 104 and S 105 until the operating device 203 is operated or the first time elapses. On the other hand, if the operating device 203 has been operated by the user or if the first time has elapsed (Yes in step S103), the control device 201 proceeds to step S106.

In step S106, the control device 201 confirms whether the alarm about the fuel cell system has been cancelled. For example, in a case where the alarm about the fuel cell system indicates an abnormality handleable by the controller 105 and/or in a case where the alarm about the fuel cell system indicates an abnormality handleable by the user, the abnormality can be cancelled by the controller 105 and/or by the user. For this reason, the control device 201 confirms whether the alarm about the fuel cell system has been cancelled.

If the alarm about the fuel cell system has been cancelled (Yes in step S106), the control device 201 causes the display device 202 to display the third display screen (step S 107). It should be noted that if a plurality of pieces of alarm information are displayed as shown in Fig. 6, the alarm information that has been cancelled is deleted from the display of the plurality of pieces of alarm information.

On the other hand, if the alarm about the fuel cell system has not been cancelled, the control device 201 causes the display device 202 to display the first display screen. As a result, thermal information is displayed on the display 101. This allows the user to use hot water more safely, and allows a maintenance service person to perform maintenance more safely.

As described above, the fuel cell system according to the present embodiment is configured such that when giving a notification of alarm information about the fuel cell system such as information indicating that an abnormality has occurred in the fuel cell system, the fuel cell system displays the alarm information without deleting the display of thermal information. This allows the user to confirm thermal infomation setting or make temperature setting, and then use hot water, such as taking a shower. Thus, the user can use hot water at ease.

Further, through detailed information display, a maintenance service person can be informed of detailed alarm information. As a result, the maintenance service person can accurately specify a failed component in a short time. This makes it possible to eliminate such work as bringing unnecessary components from the repairing center, and thus such a waste of man hours can be eliminated. In this manner, the maintenance time can be reduced.

Still further, the user is allowed to confirm thermal information setting or the operation state of the hot water storage unit, and then use the system equipment or perform maintenance. Thus, the equipment can be used more safely.

Still further, the cause of an abnormality can be determined at the repairing center and thereby a component to be repaired can be specified at the repairing center. Since a probable cause of an abnormality can be thus determined, advice can be provided to the user about the usage of the equipment, and thereby failures to occur in the future can be reduced. Still further, the details of how to handle alarm information are displayed, which allows the user to handle some failures by themselves. As a result, the necessity for the repairing center to send a maintenance service person to the user is reduced. This makes it possible to reduce, for the user, the cost of maintenance for repairing and the cost of periodic maintenance.

Still further, in the second display state, when the operating device is operated or a predetermined period of time (first time) has elapsed, the display returns to a screen showing thermal information. Thus, alarm information is displayed without deleting the display of thermal information. This allows the user to confirm thermal information setting or make temperature setting, and then use hot water, such as taking a shower. Thus, the user can use hot water at ease.

It should be noted that the control device described above in the present embodiment may be implemented in the form of a program that causes such hard resources as an electronic information device, a computer, and a server to operate in cooperation with each other, the hard resources including a CPU (or a microcomputer), RAM, ROM, storage device, I/O, etc. If the control device is implemented in the form of a program, the program can be readily distributed, updated, and installed since the program can be stored in a storage medium such as a magnetic storage medium or an optical storage medium, and can be delivered by using communication lines such as the Internet.

It should be noted that the above-described fuel cell system is not limited to a household fuel cell system, but may be an industrial fuel cell system such as an office-use fuel cell system or a factory-use fuel cell system.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The structural and/or functional details may be substantially altered without departing from the spirit of the present invention. In addition, various inventions can be made by suitable combinations of a plurality of components disclosed in the above embodiments.

### Industrial Applicability

The fuel cell system according to the present invention allows, even in a case where an abnormality has occurred in the system, a user to confirm thermal information and then use hot water. Thus, the user can use hot water at ease. Therefore, the present invention is applicable to gas-fired power generators as well as fuel cell systems such as a solid polymer fuel cell system and a solid oxide fuel cell system.

### Reference Signs List

- 100: power generation unit
- 101: display
- 102: hot water storage unit
- 103: household
- 104: in-home communication line
- 105: controller
- 201: control device
- 202: display device
- 203: operating device
- 204: communication device
- 205: storage device

## Claims

1. A fuel cell system including: a power generation unit configured to generate electric power and heat by using a fuel gas and an oxidizing gas; and a hot water storage unit configured to store the heat that is supplied from the power generation unit, the fuel cell system comprising:
a display including a control device, an operating device, and a display device; and
a controller configured to output an alarm signal to the display, wherein
the display device of the display is configured to switch a screen to display between at least a first display screen and a second display screen,
the first display screen displays both thermal information and alarm information, the thermal information containing at least one of a set temperature of hot water supply from the hot water storage unit, a remaining hot water amount in the hot water storage unit, and an operation state of a heating device configured to heat hot water in the hot water storage unit, the alarm information indicating a content associated with the alarm signal,
the second display screen displays both the alarm information and detailed alarm information which indicates a more detailed content than the alarm information, and
the control device of the display is configured such that
when the alarm signal is inputted from the controller, the control device causes the display device to display the first display screen, and
when the operating device is operated while the first display screen is displayed, the control device causes the display device to display the second display screen.

2. The fuel cell system according to claim 1, wherein
the display includes a storage device storing a table or a map, the table or the map indicating a correspondence relationship between the alarm signal, the alarm information, and the detailed alarm information.

3. The fuel cell system according to claim 2, wherein
the control device of the display specifies the alarm information and the detailed alarm information based on the alarm signal inputted from the controller and the table or the map stored in the storage device.

4. The fuel cell system according to claim 1 or claim 2, wherein
while the display device displays the second display screen, when a first time set in advance has elapsed and/or the operating device is operated, the control device of the display causes the display device to display the first display screen or a third display screen, the third display screen not displaying the alarm information.

5. The fuel cell system according to any one of claims 1 to 4, wherein
the detailed alarm intormation contains at least one of:
information indicating whether an abnormality that has occurred is handleable by a user; and
information indicating that the abnormality that has occurred is handleable by the user and indicating how to handle the abnormality.

6. The fuel cell system according to any one of claims 1 to 5, wherein
the detailed alarm information contains at least one of:
information about a name of the alarm signal; and
information about a probable cause of an abnormality that has occurred in the fuel cell system.

7. The fuel cell system according to any one of claims 1 to 6, wherein
the detailed alarm information contains at least one of:
information about a period remaining until periodic maintenance on the fuel cell system is performed; and
information about a period remaining until an end of a life of the fuel cell system is reached.

8. The fuel cell system according to claim 7, wherein
the control device of the display changes a manner of displaying the detailed alarm information when at least one of the period remaining until the maintenance on the fuel cell system is performed and the period remaining until the end of the life of the fuel cell system is reached has become a first period or shorter.

9. The fuel cell system according to claim 8, wherein
the control device of the display causes the display device to display at least one of the alarm information and the detailed alarm information in such a manner as to blink at a first cycle.

10. The fuel cell system according to claim 9, wherein
the control device of the display causes the display device to display at least one of the alarm information and the detailed alarm information in such a manner as to blink at a second cycle when at least one of the period remaining until the maintenance on the fuel cell system is performed and the period remaining until the end of the life of the fuel cell system is reached has become a second period or shorter, the second period being shorter than the first period.

11. The fuel cell system according to claim 10, wherein the second cycle is shorter than the first cycle.

12. The fuel cell system according to any one of claims 1 to 11, wherein the thermal information further contains a hot water temperature in a bathtub.

13. A method of controlling a fuel cell system including: a power generation unit configured to generate electric power and heat by using a fuel gas and an oxidizing gas; and a hot water storage unit configured to store the heat that is supplied from the power generation unit,
the method comprising the steps of:
(A) causing, when an alarm signal is inputted into a control device of a display, a display device of the display to display both thermal information and alarm information, the thermal information containing at least one of a set temperature of hot water supply from the hot water storage unit, a remaining hot water amount in the hot water storage unit, and an operation state of a heating device configured to heat hot water in the hot water storage unit, the alarm information indicating a content associated with the alarm signal; and
(B) causing, when an operating device of the display is operated after the step (A), the display device of the display to display both the alarm information and detailed alarm information which indicates a more detailed content than the alarm information.
